**Europäisches Patentamt**

**European Patent Office**

**Office européen des brevets**

(11) Numéro de publication : **0 324 685 B1**

# (12) FASCICULE DE BREVET EUROPEEN

(45) Date de publication du fascicule du brevet :
**11.03.92 Bulletin 92/11**

(51) Int. Cl.⁵ : **B25J 9/06, B25J 18/00, F22B 37/00**

(21) Numéro de dépôt : **89400079.3**

(22) Date de dépôt : **11.01.89**

(54) **Procédé de mise en place d'un robot porte-outils destiné à des interventions en milieu humainement hostile.**

(30) Priorité : **14.01.88 FR 8800344**

(43) Date de publication de la demande :
**19.07.89 Bulletin 89/29**

(45) Mention de la délivrance du brevet :
**11.03.92 Bulletin 92/11**

(84) Etats contractants désignés :
**BE DE ES FR GB NL SE**

(56) Documents cités :
**FR-A- 2 375 011**
**US-A- 4 561 816**
**US-A- 4 585 388**

(73) Titulaire : **HISPANO-SUIZA Société anonyme dite:**
**333, Bureaux de la Colline**
**F-92213 Saint Cloud (FR)**

(72) Inventeur : **Gery, Daniel Edouard**
**17, rue de la Côte Saint Rémy**
**F-95240 Cormeilles en Parisis (FR)**
Inventeur : **Meunier, Philippe**
**6, route de Noisy**
**F-78620 l'Etang la Ville (FR)**

(74) Mandataire : **Moinat, François**
**S.N.E.C.M.A. Service des Brevets Boîte Postale 81**
**F-91003 Evry Cédex (FR)**

EP 0 324 685 B1

## Description

L'invention concerne le domaine des interventions robotisées dans des milieux humainement hostiles. Elle concerne plus particulièrement un procédé de mise en place d'un robot destiné à effectuer des opérations d'inspection et de maintenance au sein d'installations nucléaires à l'intérieur desquelles une présence humaine ne peut être tolérée qu'au prix de sévères conditions de protection. Une telle situation se rencontre notamment pour la maintenance des générateurs de vapeur des centrales nucléaires à eau pressurisée. Pour ces opérations on a déja proposé d'utiliser un robot porte-outils constitué d'un bras articulé placé sous l'autorité d'une unité logique. La base de ce robot est fixée à un mât support placé sous la cuve du générateur de vapeur et disposant d'un certain nombre de degrés de liberté permettant ainsi d'approcher le robot de l'ouverture pratiquée dans la cuve par laquelle il parviendra sur son lieu d'intervention.

Cette disposition antérieure présente un certain nombre d'inconvénients. En effet le mât support constitue une installation particulièrement lourde et ne permet pas d'avoir un référentiel connu et stable dans le temps.

La mise en place d'un tel dispositif est par ailleurs relativement longue ce qui est préjudiciable à la durée de l'immobilisation de l'installation.

On connait également, par exemple par le US-A-4.561.816, un dispositif qui se fixe sur un support que l'on place préalablement sur l'ouverture du trou d'homme. Ce dispositif présente l'inconvénient de ne pas se hisser seul au niveau de la cuve mais aussi celui de nécessiter l'ouverture préalable du trou d'homme, la dépose de l'obturateur de contamination ne pouvant être faite par le robot lui même.

La présente invention a précisément pour objet un procédé permettant de supprimer le mât support pour la mise en place d'un robot porte-outils du genre décrit ci-dessus constitué par un bras articulé, placé sous l'autorité d'une unité centrale logique, dont une extrêmité, dite semelle, est fixée à l'extérieur de la zone d'intervention, délimitée par une enceinte, en un premier point de coordonnées connues et dont l'autre extrêmité, dite tête, est destinée à recevoir les outils nécessaires à l'intervention. Selon ce procédé, dans un premier temps, le robot est amené en un point prédéterminé au moyen d'un chariot auquel sa semelle est provisoirement solidarisée, la tête du robot est alors fixée en un deuxième point de coordonnées connues situé à l'extérieur de la zone d'intervention, puis dans un deuxième temps, prenant appui par sa tête sur ce point, le robot libère sa semelle et se déplace de façon autonome pour amené ladite semelle en position de travail à proximité de l'ouverture ménagée dans l'enceinte de la zone d'intervention, enfin dans un troisième temps, une fois la semelle fixée au premier point de coordonnées connues, la tête est libérée et le robot effectue un rétablissement sur lui-même pour amener la tête en position de travail dans la zone d'intervention.

Dans un mode de réalisation particulièrement avantageux, la tête et la semelle du robot se solidarisent et se libèrent de leurs points de fixation respectifs de manière autonome, sous l'autorité de l'unité centrale logique.

De manière préférentielle, pour l'utilisation du robot sur un générateur de vapeur d'un réacteur nucléaire à eau pressurisée dont l'ouverture d'accès est munie d'une double protection constituée successivement, de l'extérieur vers l'intérieur, d'une plaque de résistance à la pression et d'un obturateur de contamination, la plaque de résistance à la pression est déposée avant mise en place du robot dont la semelle vient, de façon autonome, se fixer en utilisant les éléments de fixation de ladite plaque, le robot retirant lui-même l'obturateur de contamination.

Pour se placer à proximité de l'ouverture, la semelle du robot a avantageusement une forme en U.

Après fixation de la semelle, le système de coordonnées est recalé en prenant comme référentiel l'ouverture d'accès et des points identifiés situés à l'intérieur de la zone d'intervention.

Pour la mise en oeuvre du présent procédé il peut être souhaitable de dissocier le dernier élément, du côté de la tête, du bras articulé et d'utiliser le système de fixation de cet élément pour la solidarisation du bras au deuxième pont de coordonnées connues.

En se référant aux figures schématiques jointes on va décrire un exemple de mise en oeuvre du procédé conforme à l'invention donné à titre non limitatif et se rapportant à la maintenance des tubes d'un générateur de vapeur d'un réacteur nucléaire à eau pressurisée.

La figure 1 représente un robot, constitué d'un bras articulé, en position de travail dans la cuve d'un générateur de vapeur et supporté, de manière connue par un mât fixé au sol.

La figure 2 représente le premier temps du procédé conforme à l'invention.

La figure 3 représente le deuxième temps du procédé conforme à l'invention.

La figure 4 représente la fin du troisième temps du procédé conforme à l'invention lorsque le robot est en position de travail.

La figure 5 représente le robot dans la position de mise en place des outils sur la tête porte-outils.

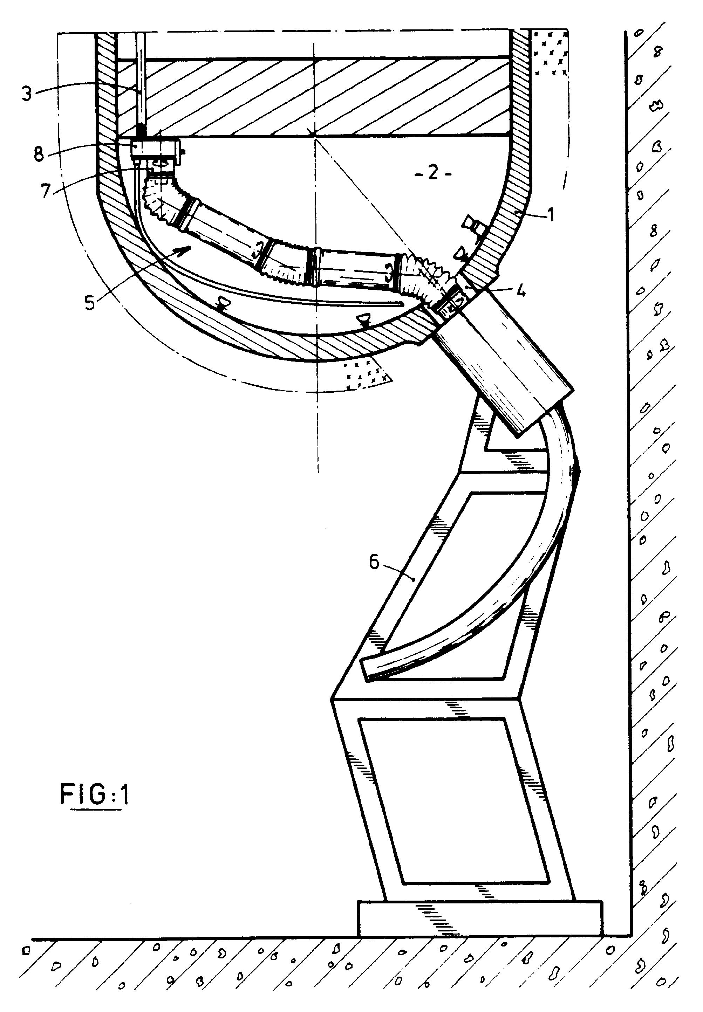

Sur la figure 1 on voit la partie inférieure de la cuve 1 d'un générateur de vapeur de centrale nucléaire à eau pressurisée. Cette partie inférieure se compose d'un espace hémi-sphérique 2, dit boite à eau, dans lequel débouchent de nombreux tubes échangeurs de chaleur 3 dont un seul a été représenté par commodité. Dans l'enceinte hémi-sphérique est ménagée une ouverture d'accès 4. En

fonctionnement normal, lorsque la cuve est pleine d'eau sous pression, l'ouverture d'accès est munie d'une double fermeture constituée, de l'extérieur vers l'intérieur, d'une plaque de résistance à la pression et d'un obturateur de contamination. A l'occasion des arrêts de tranche, l'ensemble du circuit d'eau est vidangé, la plaque de résistance à la pression est ensuite déposée et il ne subsiste que l'obturateur de contamination qui sera retiré par le robot lui-même. On a représenté sur cette figure un robot 5 porte-outils, du type constitué d'un bras articulé en position de travail. D'une manière connue ce robot 5 est fixé à l'extrémité supérieure d'un mât support 6 disposant d'un certain nombre de degrés de liberté (monte et baisse, rotation).

Le robot 5 est ainsi amené à proximité de la cuve 1 à l'intérieur de laquelle il peut pénétrer par l'ouverture d'accès 4. La tête 7 du robot est équipée d'un support d'outils 8 qui peut recevoir des accessoires de diverses natures pour effectuer des opérations d'observation ou de réparation notamment des tubes échangeurs 3 qui nécessitent un entretien particulier.

Ce robot 5 constitué d'un bras articulé est d'un genre connu tel que celui déjà utilisé par la Société Demanderesse sous la désignation ISIS sur des installations du type dit graphite-gaz. Dans l'exemple représenté il est équipé de trois articulations et de trois dispositifs de rotation.

Dans les figures suivantes qui représentent les différentes étapes du procédé conforme à l'invention on utilise un robot 5 identique à celui de la figure 1.

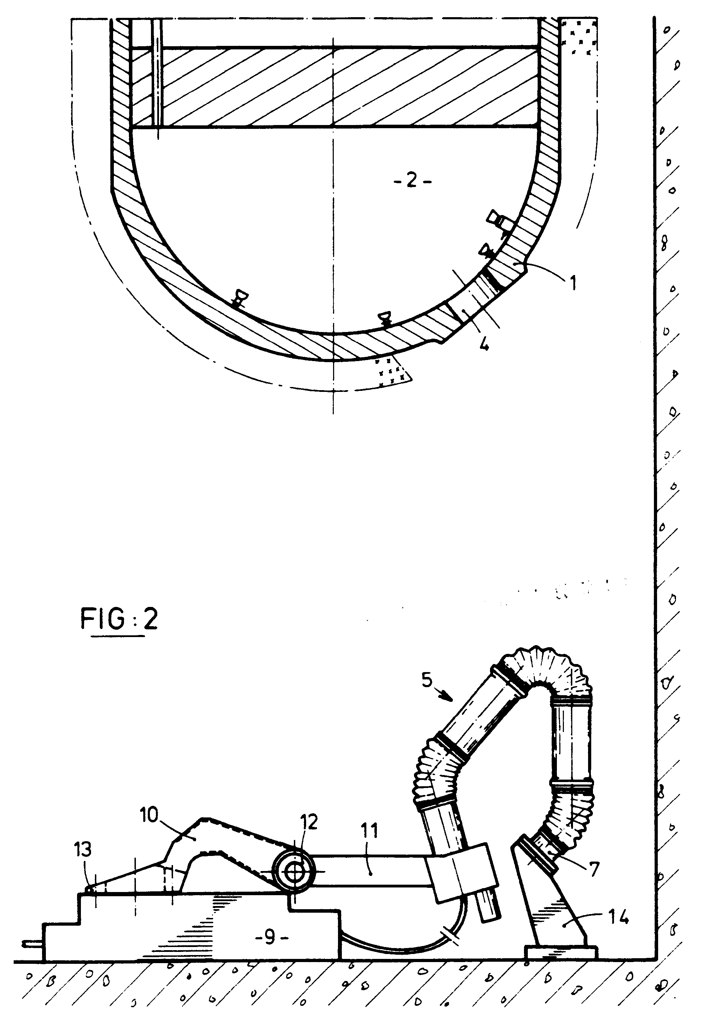

A la figure 2 on voit la première étape du procédé conforme à l'invention. Le robot articulé 5 est amené sous la cuve 1 du générateur de vapeur, en un point prédéterminé, au moyen d'un chariot 9. Le robot proprement dit 5 est relié au chariot 9 par l'intermédiaire d'un compas constitué de deux branches 10 et 11 reliées par une articulation 12. La première branche 10, située du côté du chariot, comporte une semelle 13 par laquelle elle est provisoirement solidarisée audit chariot. L'extrémité de la seconde branche 11, opposée à l'articulation 12, supporte le bras articulé proprement dit. Conformément à l'invention, une fois le chariot 9 en place, le robot 5 se déploie, sous l'action de ses propres moyens moteurs et sous la commande de l'unité centrale logique, pour venir verrouiller sa tête 7 sur un point support 14 de coordonnées connues.

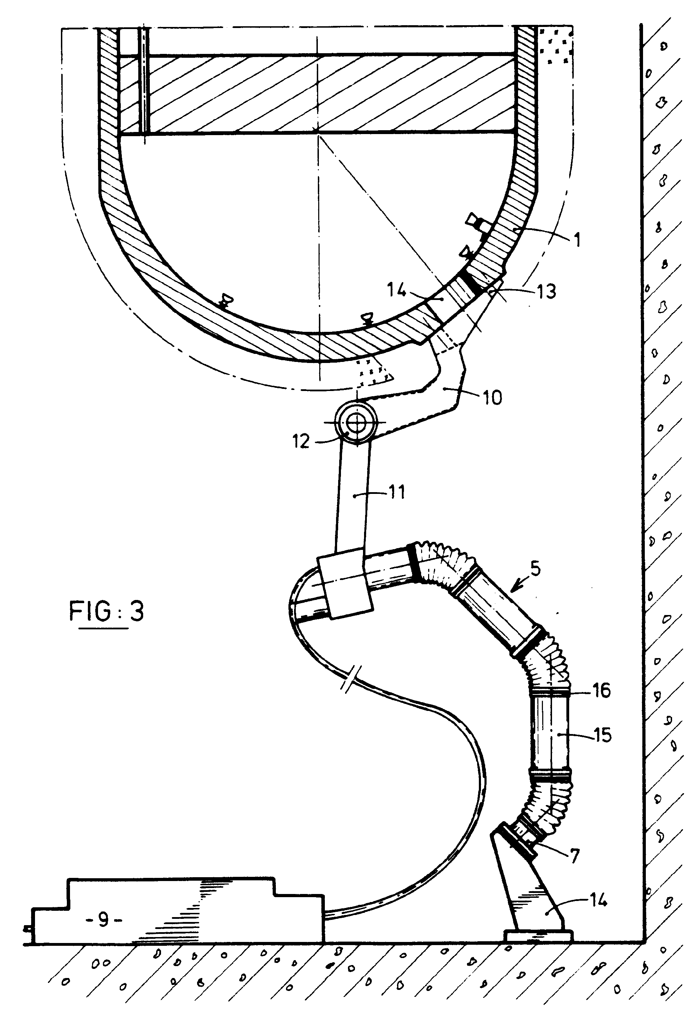

Dans la position représentée à la figure 3, la semelle 13 s'est libérée du chariot 9 et, prenant appui par la tête 7 sur le support 14, le robot vient lui même, par ses propres moyens moteurs et sous la commande de l'unité centrale logique, placer et fixer la semelle 13 à proximité de l'ouverture 4 de la cuve 1. Avantageusement la plaque de résistance à la pression qui obture l'ouverture 4 en fonctionnement normal aura été préalablement retirée et le robot pourra utiliser les moyens de fixation de ladite plaque pour fixer la semelle 13. On comprendra aisément que, l'ouverture 4 étant circulaire il est intéressant de donner à la semelle 13 une forme en U. Dans une variante de mise en oeuvre de ce procédé, un meilleur résultat pourra être obtenu en dissociant le dernier élément 15 du robot 5 et en utilisant la fixation 16 de ce dernier élément pour solidariser le robot au support 14. En effet, dans ce cas, le nombre d'articulations reste largement suffisant et on dispose, au niveau de ces articulations de couples moteurs supérieurs à celui de la dernière articulation. Sinécessaire, en fonction de l'environnement et sans changer l'esprit de l'invention, le point support 14 pourra, moyennant une adaptation, servir d'appui, donc de référentiel, à n'importe quelle articulation du bras 5.

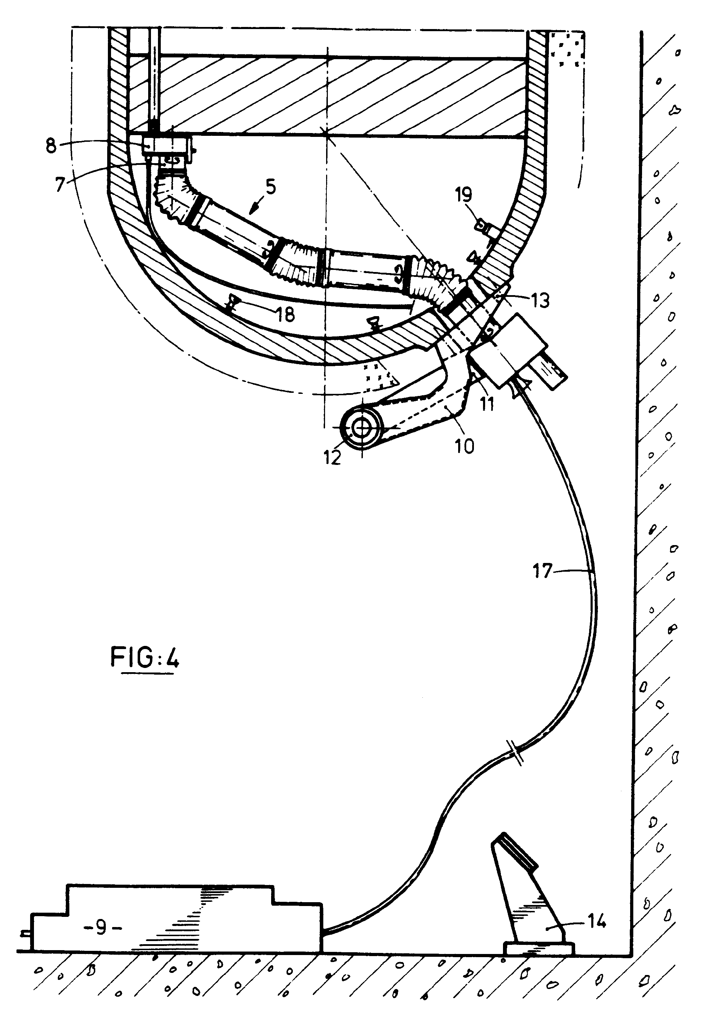

Le robot est maintenant en mesure d'effectuer la dernière étape de sa mise en place représentée à la figure 4, à cet effet il libère sa tête 7 où celle des articulations utilisée, du support 14 et, prenant appui sur la semelle 13, il effectue un rétablissement sur lui-même, retire l'obturateur de contamination, et s'introduit par l'ouverture 4 pour venir en position de travail dans la zone d'intervention. Dans cette dernière position, les branches 10 et 11 du compas se sont refermées autour de l'articulation 12, le robot 5 se retrouve dans une position de travail analogue à celle de l'art antérieur représenté à la figure 1, mais ici il n'est plus relié au sol que par son câble de commande 17. Au passage de la tête 7 au travers de l'ouverture 4, il est possible, au moyen d'un outillage capteur approprié de recaler le référentiel de l'unité de commande sur un diamètre de l'ouverture ainsi, des corrections sont apportées aux trajectoires, apprises en conception assistée par ordinateur (C.A.O.) et qui sont mémorisées dans l'unité centrale. Ainsi le robot travaillera avec une plus grande précision. De même, par des moyens de visées, vidéo par exemple, il est possible d'améliorer la précision du système en visant des points de coordonnées connues situées à l'intérieur 2 de la cuve 1. On notera à cet effet la présence, de manière habituelle de projecteurs 18 qui peuvent être complétés d'une caméra 19 pour une surveillance visuelle des travaux effectués par le robot.

De la description qui précède, on comprendra aisément que le procédé de mise en place conforme à l'invention conduit à un allègement considérable par rapport au dispositif antérieur de la figure 1 mettant en oeuvre le mât support 6. Ce procédé de mise en place conduit également à un gain de temps appréciable pour la réalisation de la maintenance prévue. Ceci est particulièrement intéressant, l'intervention devant être rapide car les arrêts des tranches de centrales nucléaires sont sévèrement programmés et très limités.

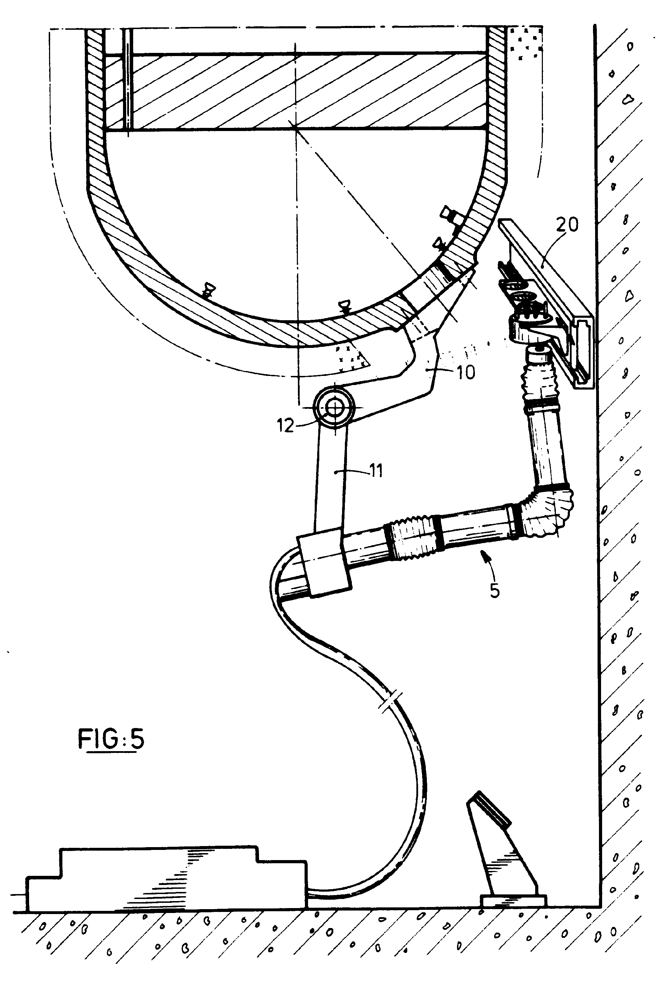

La présence du compas constitué par les bras 10 et 11 et l'articulation 12 est également utile pour la manoeuvre du robot pendant son travail. Ceci est illustré à la figure 5 sur laquelle on voit le robot venir chercher, sur un magasin 20 ménagé à cet effet, l'outillage nécessaire pour l'opération prévue.

On voit sur cette figure que ce compas facilite les entrées et sorties du robot par l'ouverture 4. Entrées et sorties qui peuvent être nombreuses au cours d'une même opération de maintenance.

Compte tenu de ses capacités de support d'outils ou d'instruments très divers, de sa légèreté et de sa facilité de mise en place ce robot possède une grande universalité et peut être avantageusement utilisé dans de très nombreuses circonstances.

Il est bien entendu que l'unité centrale logique qui assure le pilotage de ce procédé de mise en place ne fait pas partie de l'invention, elle assure la mémorisation de toutes les trajectoires et leur gestion automatique, ainsi que toutes les fonctions de calcul nécessaires aux divers accostages.

## Revendications

1. Procédé de mise en place d'un robot (5) porte-outils destiné à des interventions en milieu humainement hostile du genre constitué par un bras articulé placé sous l'autorité d'une unité centrale logique, dont une extrémité, dite semelle (13), est fixée à l'extérieur de la zone d'intervention, délimitée par une enceinte, en un premier point de coordonnées connues et dont l'autre extrémité, dite tête (7), est destinée à recevoir les outils nécessaires à l'intervention, caractérisé en ce que, dans un premier temps, le robot (5) est amené en un point prédéterminé au moyen d'un chariot (9) auquel sa semelle (13) est provisoirement solidarisée, la tête (7) du robot (5) est alors fixée en un deuxième point de coordonnées connues (14) situé à l'extérieur de la zone d'intervention, puis, dans un deuxième temps, prenant appui par sa tête (7) sur ce point (14), le robot (5) libère sa semelle (13) et se déplace de façon autonome pour amener ladite semelle (13) en position de travail à proximité de l'ouverture (4) ménagée dans l'enceinte (1) de la zone d'intervention, enfin dans un troisième temps, une fois la semelle (13) fixée au premier point de coordonnées connues, la tête (7) est libérée et le robot (5) effectue un rétablissement sur lui-même pour amener la tête (7) en position de travail dans la zone d'intervention (2).

2. Procédé de mise en place d'un robot porte-outils selon la revendication 1 caractérisé en ce que la tête (7) du robot se solidarise et se libère de manière autonome du second point de coordonées connues (14).

3. Procédé de mise en place d'un robot porte-outil selon la revendication 1 ou 2 caractérisé en ce que la semelle (13) du robot se fixe de manière autonome au premier point de coordonnés connues situé à proximité de l'ouverture (4) ménagée dans l'enceinte de la zone d'intervention.

4. Procédé de mise en place d'un robot porte-outils selon l'une des revendications 1 à 3, caractérisé en ce que, pour réaliser des interventions sur une enceinte (1) dont l'ouverture d'accès (4) est munie d'une double protection constituée successivement, de l'extérieur vers l'intérieur, d'une plaque de résistance à la pression et d'un obturateur de contamination, la plaque de résistance à la pression est déposée avant mise en place du robot dont la semelle vient de façon autonome se fixer en utilisant les éléments de fixation de ladite plaque.

5. Procédé de mise en place d'un robot porte-outils selon la revendication 4 caractérisé en ce que le robot (5) retire lui-même, lorsque la semelle (13) est fixée, au moyen de la tête (7), l'obturateur de contamination.

6. Procédé de mise en place d'un robot porte-outils selon l'une des revendications 1 à 5 caractérisé en ce que la semelle (13) a une forme générale en U et vient encadrer l'ouverture d'accès (4) à la zone d'intervention (2).

7. Procédé de mise en place d'un robot porte-outils selon l'une des revendications 1 à 6, caractérisé en ce que le système de coordonnées est recalé en prenant comme référence le diamètre de l'ouverture d'accès (4) et en identifiant des points connus situés à l'intérieur de la zone d'intervention.

8. Procédé de mise en place d'un robot porte-outils selon l'une des revendications 1 à 7 caractérisé en ce que le dernier élément (15) du bras (5), situé du côté de la tête (7) peut se dissocier et n'est pas utilisé dans la première phase de la mise en place, dans ce cas, le système de fixation (16) de cet élément (15) est utilisé pour la solidarisation du bras au deuxième point de coordonnées connues (14).

## Claims

1. Method for positioning a tool-carrying robot (5) intended for operations in an environment hostile to man, of the kind consisting of an articulated arm, controlled by a central logic unit, one end of which, called a foot-plate (13), is fixed outside the operating zone, delimited by a containment, at a first point with known coordinates, and the other end of which, called a head (7), is intended to receive the tools required for the operation, characterised in that, firstly, the robot (5) is brought to a predetermined point by means of a carriage (9) to which its foot-plate (13) is temporarily fixed, the head (7) of the robot (5) is then fixed at a second point with known coordinates (14), located outside the operating zone, then, secondly, resting with its head (7) on this point (14), the robot (5) frees its foot-plate (13) and moves independently so as to bring the said foot-plate (13) into a working position in the vicinity of the opening (4) formed in the containment (1) around the operating zone, finally, thirdly, once the foot-plate (13) has been fixed at the first point with known coordinates, the head (7) is freed, and the robot (5) folds back on itself so as to bring the head (7) into a working position inside the operating zone (2).

2. Method for positioning a tool-carrying robot according to Claim 1, characterised in that the head (7) of the robot independently fixes itself to and frees itself from the second point with known coordinates (14).

3. Method for positioning a tool-carrying robot according to one of Claims 1 or 2, characterised in that the foot-plate (13) of the robot independently fixes itself to the first point with known coordinates, located close to the opening (4) formed in the containment around the operating zone.

4. Method for positioning a tool-carrying robot according to one of Claims 1 to 3, characterised in that, in order to perform operations on a containment (1), the access opening (4) of which is provided with a double protection consisting in succession, from the outside inwards, of a pressure resistance plate and a contamination obturator, the pressure resistance plate is removed before positioning of the robot, the foot-plate of which independently fixes itself in position using the elements for fixing said plate.

5. Method for positioning a tool-carrying robot according to Claim 4, characterised in that, when the foot-plate (13) is fixed, the robot (5) itself removes the contamination obturator by means of the head (7).

6. Method for positioning a tool-carrying robot according to one of Claims 1 to 5, characterised in that the foot-plate (13) is generally U-shaped and surrounds the opening (4) providing access to the operating zone (2).

7. Method for positioning a tool-carrying robot according to one of Claims 1 to 6, characterised in that the system of coordinates is reset by taking as a reference point the diameter of the access opening (4) and by identifying known points located inside the operating zone.

8. Method for positioning a tool-carrying robot according to one of Claims 1 to 7, characterised in that the last element (15) of the arm (5) located on the head side (7), may be detached and is not used in the first stage of the positioning operation; in this case, the device (16) for fixing this element (15) is used in order to join the arm to the second point with known coordinates (14).

**Patentansprüche**

1. Verfahren zum Plazieren eines Werkzeughalter-Roboters (5) für Eingriffe in für Menschen unzuträglichem Milieu, der von einem unter dem Einfluß einer zentralen Logikeinhelt stehenden Gelenkarm gebildet ist, der mit einem als Fuß (13) bezeichneten Endbereich außerhalb der von einer Umhüllung begrenzten Eingriffszone in einem ersten Punkt mit bekannten Koordinaten fixiert ist und dessen als Kopf (7) bezeichneter anderer Endbereich zur Aufnahme der für den Eingriff benötigten Werkzeuge dient, dadurch gekennzeichnet, daß der Roboter (5) in einer ersten Zelt mit Hilfe eines Wagens (9), an dem der Fuß (13) provisorisch befestigt ist, an einen vorbestimmten Punkt geführt und der Kopf (7) des Roboters dann an einem zweiten Punkt (14) mit bekannten Koordinaten fixiert wird, der außerhalb der Eingriffszone liegt, daß der Roboter dann in einer zweiten Zeit seinen Fuß (13) löst, wobei er sich mit seinem Kopf (7) an dem letztgenannten Punkt (14) abstützt, und sich autonom bewegt, um den Fuß (13) in Arbeitsposition in der Nähe der in der Umhüllung (1) der Eingriffszone angebrachten Öffnung zu führen, und daß schließlich in einer dritten Zelt, nachdem der Fuß (13) an dem ersten Punkt mit bekannten Koordinaten fixiert ist, der Kopf freigegeben wird und der Roboter (5) sich wieder aufrichtet, um den Kopf (7) in der Eingriffszone (2) in Arbeitsposition zu bringen.

2. Verfahren zum Plazieren eines Werkzeughalter-Roboters nach Anspruch 1, dadurch gekennzeichnet, daß der Kopf (7) des Roboters sich autonom an dem zweiten Punkt (14) mit bekannten Koordinaten befestigt und von ihm löst.

3. Verfahren zum Plazieren eines Werkzeughalter-Roboters nach Anspruch 1 oder 2, dadurch gekennzeichnet, daß der Fuß (13) des Roboters sich autonom an einem ersten Punkt mit bekannten Koordinaten fixiert, der in der Nähe der Öffnung (4) liegt, die im Bereich der Eingriffszone in der Umhüllung angebracht ist.

4. Verfahren zum Plazieren eines Herkzeughalter-Roboters nach einem der Ansprüche 1 bis 3, dadurch gekennzeichnet, daß zur Ausführung der Eingriffe an einer Umhüllung (1), deren Zugangsöffnung (4) mit einem doppelten Schutz ausgestattet ist, der, von außen nach innen, aufeinanderfolgend aus einer druckfesten Platte und einem Kontäminationsverschlußteil besteht, die druckfeste Platte vor dem Plazieren des Roboters abgelegt wird, und der Fuß des Roboters sich autonom fixiert und dabei die Befestigungselemente der Platte verwendet.

5. Verfahren zum Plazieren eines Herkzeughalter-Roboters nach Anspruch 1, dadurch gekennzeichnet, daß der Roboter (5) das Kontaminationsverschlußteil mit Hilfe des Kopfes (7) selbst zurückzieht, wenn der Fuß (13) fixiert ist.

6. Verfahren zum Plazieren eines Herkzeughalter-Roboters nach einem der Ansprüche 1 bis 5, dadurch gekennzeichnet, daß der Fuß (13) eine im wesentlichen U-förmige Gestalt hat, mit der er die Zugangsöffnung (4) der Eingriffszone (2) umgreift.

7. Verfahren zum Plazieren eines Herkzeughalter-Roboters nach Anspruch 6, dadurch gekennzeichnet, daß das Koordinatensystem neu eingerichtet wird, indem man als Referenzpunkt den Durchmesser der Zugangsöffnung (4) heranzleht und bekannte Punkte im innern der Eingriffszone identifiziert.

8. Verfahren zum Plazieren eines Herkzeughalter-Roboters nach einem der Ansprüche 1 bis 7, dadurch gekennzeichnet, daß das letzte Element (15) des Gelenkarms (5), das auf der Seite des Kopfes (7) liegt, abtrennbar ist und in der ersten Phase des Plazierens nicht verwendet wird, wobei das Befestigungssystem (16) dieses Elements (15) in diesem Fall für die Festlegung des Arms an dem zweiten Punkt (14) mit bekannten Koordinaten verwendet wird.

FIG:1

FIG : 2

FIG : 3

FIG:4

FIG:5